**Europäisches Patentamt**

**European Patent Office**

**Office européen des brevets**

(19)

(11) Numéro de publication: **0 218 535**
A2

## (12) DEMANDE DE BREVET EUROPEEN

(21) Numéro de dépôt: 86420240.3

(22) Date de dépôt: 23.09.86

(51) Int. Cl.⁴: **G 01 N 23/207**

(30) Priorité: 24.09.85 FR 8514309

(43) Date de publication de la demande: 15.04.87
**Bulletin 87/16**

(84) Etats contractants désignés: **AT BE CH DE GB IT LI LU NL SE**

(71) Demandeur: **UNIVERSITE DE METZ, Ile de Saulcy, F-57045 Metz Cédex (FR)**

(72) Inventeur: **Heizmann, Jean-Julien, 32, rue de la Gare Pommerieux Gare, F-57420 Verny (FR)**
Inventeur: **Laruelle, Christian, 2, chemin Noir Lorry Les Metz, F-57050 Metz (FR)**

(74) Mandataire: **Ropital-Bonvarlet, Claude et al, Cabinet BEAU DE LOMENIE 99, Grande rue de la Guillotière, F-69007 Lyon (FR)**

(54) Procédé et dispositif de détermination de la texture cristallographique d'un matériau polycristallin.

(57) Selon l'invention, on dispose un compteur courbe (30) dans un plan perpendiculaire au faisceau de rayons X incident (211), on oriente le plan de l'échantillon (1) de manière qu'il définisse un angle prédéterminé β par rapport au faisceau incident (211), on déplace le compteur (30) parallèlement au faisceau incident (211) jusqu'à ce que le compteur (30) coïncide avec une section du cône de DEBYE (201) défini par les faisceaux diffractés (214), on fait tourner l'échantillon (1) autour de l'axe (Oz) perpendiculaire à celui-ci, on mesure pour chaque position sur le compteur (30) en fonction de la position angulaire en azimut de l'échantillon (1) la densité de rayonnement diffracté et on établit la position et la densité des normales à une famille de plans réticulaires (hkl) de l'échantillon sous la forme d'une figure de pôles à partir des mesures effectuées avec le compteur (30).

Application à la détermination de la texture cristallographique de matériaux polycristallins.

# PROCEDE ET DISPOSITIF DE DETERMINATION DE LA TEXTURE CRISTALLOGRAPHIQUE D'UN MATERIAU POLYCRISTALLIN :

La présente invention concerne un procédé de détermination de la texture cristallographique d'un matériau polycristallin selon lequel on positionne un échantillon du matériau à analyser par rapport à un faisceau de rayons X incident et on analyse le faisceau de rayons X diffracté par l'échantillon à l'aide d'un compteur à scintillation du type compteur courbe multicanaux.

La plupart des matériaux utilisés sont polycristallins. Les propriétés de tels matériaux sont, généralement, anisotropes, c'est-à-dire que ces propriétés sont différentes selon la direction d'observation ou de mesure.

Cette anisotropie est fonction de l'anisotropie même du cristal, mais aussi de la distribution des orientations des cristallites constituant le matériau.

La texture cristallographique correspond à cette distribution des orientations des cristallites dans le matériau. Elle joue un rôle très important, d'une part, pour connaître les propriétés du matériau, d'autre part, pour prévoir l'évolution de ses propriétés, notamment mécaniques, physiques et chimiques.

Une certaine anisotropie du matériau peut être recherchée pour donner au matériau des propriétés particulières (tôles magnétiques), mais dans d'autres cas cette anisotropie peut devenir indésirable (cornes d'emboutissage).

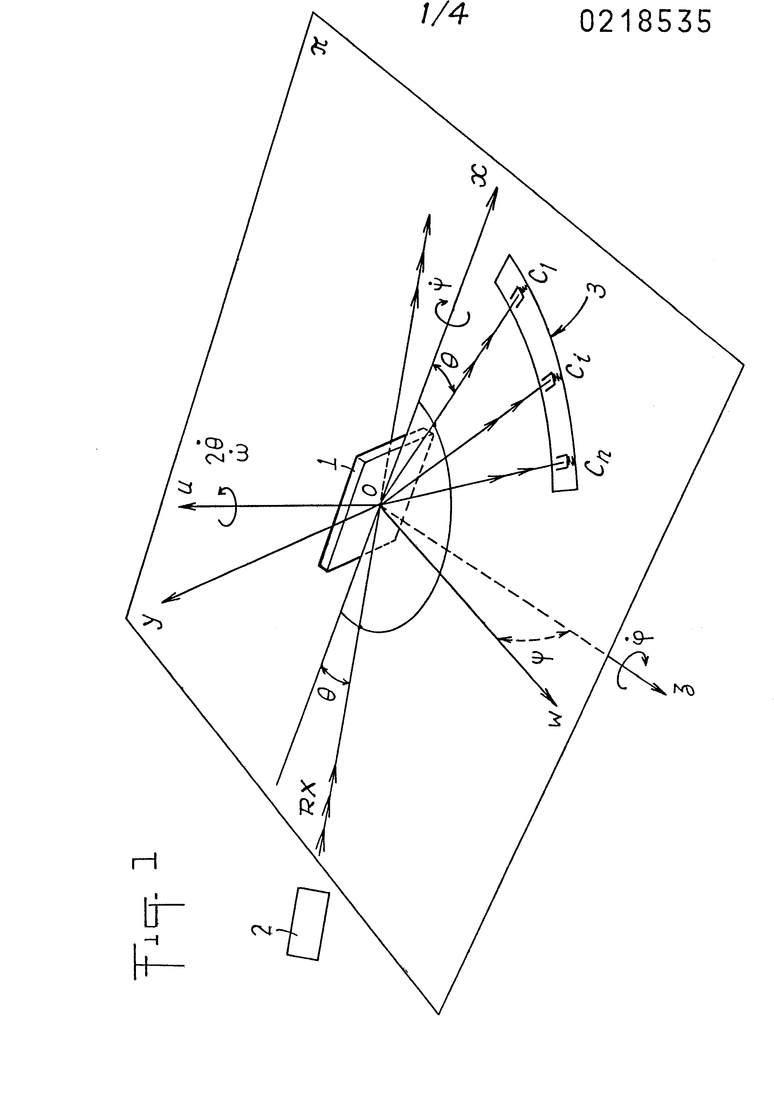

On utilise, généralement, pour déterminer la texture cristallographique d'un matériau, un goniomètre fonctionnant selon le principe de SCHULZ. Un tel goniomètre comprend des moyens pour faire tourner un échantillon 1 autour de trois axes Ox, Ou, Oz (rotations $\psi$, $\omega$, $\dot{\varphi}$ respectivement), comme représenté schématiquement sur la fig. 1.

L'axe Ox est dans le plan de l'échantillon et dans le plan d'incidence,

l'axe Ou est perpendiculaire au plan d'incidence et
l'axe Oz est perpendiculaire à l'échantillon.

On a en outre représenté l'axe Oy qui est perpendiculaire
aux axes Ox et Oz et complète le repère de référence lié à l'échantillon. Le faisceau $R_x$ de rayons X incident émis par une source 2
et frappant l'échantillon 1 sous un angle $\theta_{hkl}$ et les rayons captés
par un compteur $C_1$ en position de BRAGG définissent un plan d'incidence $\pi$ . Si la normale OW à une famille de plans réticulaires (hkl)
est dans le plan d'incidence $\pi$ et constitue la bissectrice de l'angle
$(\pi - 2\,\theta_{hkl})$ défini par le rayon $R_x$ et le rayon diffracté dirigé
vers le compteur $C_1$, ce dernier enregistre l'intensité de la diffraction par les plans (hkl) considérés, en fonction de la valeur des
angles $\varphi$ et $\psi$ correspondant à des rotations de l'échantillon 1 autour
des axes Oz et Ox qui sont, respectivement, perpendiculaires à l'échantillon et situés dans le plan de celui-ci.

En faisant varier les angles $\varphi$ et $\psi$ , les plans (hkl)
de l'échantillon 1 peuvent être amenés, successivement, en position
de réflexion de BRAGG. Le compteur $C_1$, placé en position $2\theta_{khl}$, par
rapport à la direction des rayons $R_x$, enregistre leur densité en
fonction des angles $\varphi$ et $\psi$ et il est alors possible de tracer la
figure de pôles correspondant aux plans (hkl).

Si l'on place un ensemble 3 de plusieurs (N) compteurs
$C_1$ à $C_N$ dans le plan d'incidence $\pi$ , ou un compteur courbe dont le
plan du cercle est confondu avec le plan d'incidence $\pi$ , et en
prenant des précautions concernant les repérages des angles $\psi$ et $\varphi$
ainsi que les corrections d'intensités nécessaires, il est possible
d'enregistrer, simultanément, N figures de pôles. Le temps nécessaire à l'enregistrement de ces N figures de pôles est, cependant,
non négligeable, compte tenu de la nécessité de réaliser des mouvements de rotation de l'échantillon 1 autour de deux axes et d'effectuer pour chaque couple d'angle ( $\psi$ , $\varphi$ ) une mesure d'intensité.

Avec les procédés de l'art antérieur, la durée et le coût
des mesures nécessaires à l'obtention de la distribution des orientations des cristallites sont tels que les analyses de texture ne
sont pas aussi généralisées qu'elles pourraient l'être.

La présente invention vise, précisément, à remédier aux

0218535

inconvénients précités et à réaliser une analyse de texture de façon plus rapide et moins coûteuse que selon l'art antérieur en permettant l'obtention de la figure de pôle relative à une famille de plans réticulaires (hkl) en n'utilisant qu'une seule rotation.

Ces buts sont atteints grâce à un procédé caractérisé en ce que l'on dispose le compteur courbe dans un plan perpendiculaire au faisceau de rayons X incident, en ce que l'on oriente le plan de l'échantillon de manière qu'il définisse un angle prédéterminé β par rapport au faisceau de rayons X incident, en ce que l'on déplace en translation le compteur courbe parallèlement au faisceau de rayons X incident jusqu'à ce que le compteur coïncide avec une section du cône de DEBYE défini par les faisceaux de rayons X diffractés par l'échantillon, en ce que l'on modifie la position azimutale de l'échantillon par rotation de celui-ci autour d'un axe Oz perpendiculaire au plan de l'échantillon, en ce que l'on mesure pour chaque position sur le compteur et en fonction de la position angulaire en azimut de l'échantillon la densité de rayonnement diffracté et en ce qu'on établit la position et la densité des normales à une famille de plans réticulaires de l'échantillon sous la forme d'une figure de pôles à partir des mesures effectuées avec le compteur.

Ce procédé est particulièrement avantageux puisque, pour chaque famille de plans (hkl), il suffit de positionner d'abord le compteur par rapport au cône de DEBYE par une simple translation et l'ensemble des mesures peuvent ensuite être effectuées alors que l'échantillon est soumis à une rotation autour d'un seul axe, ce qui simplifie les mesures et diminue le temps nécessaire à celles-ci. De la sorte, on peut, quand cela est nécessaire, en un temps réduit, renouveler l'opération de manière à obtenir des figures de pôles pour plusieurs familles de plans réticulaires (hkl).

Les rotations azimutales de l'échantillon peuvent être effectuées pas à pas ou de manière continue.

L'invention concerne, également, un dispositif de détermination de la texture cristallographique d'un matériau polycristallin adapté au procédé selon l'invention, qui comprend un support d'échantillon, une source de rayons X, un compteur courbe à scintillation

4    0218535

multicanaux, des moyens d'orientation du support d'échantillon pour orienter le plan xOy de l'échantillon par rapport à la direction des rayons X émis par la source de rayonnement, des moyens pour faire tourner le support d'échantillon, de telle sorte que l'échantillon effectue une rotation azimutale autour de la normale Oz au plan xOy de l'échantillon, des moyens pour maintenir le compteur courbe dans un plan perpendiculaire à la direction des rayons X émis par la source et des moyens pour déplacer en translation le compteur courbe parallèlement à la direction des rayons X émis par la source.

Le compteur courbe multicanaux peut comporter entre environ quinze et trente canaux ou plus répartis sur une portion de circonférence s'étendant sur un secteur d'ouverture 90°.

D'autres caractéristiques et avantages de l'invention ressortiront de la description suivante d'un mode particulier de réalisation, donné à titre d'exemple, en référence aux dessins annexés, sur lesquels :

- la fig. 1 est une vue schématique, en perspective, d'un échantillon montrant le principe d'une détermination de texture selon un procédé connu,

- la fig. 2 est une vue schématique en perspective d'un échantillon montrant le principe de la détermination de sa texture cristallographique selon un procédé conforme à la présente invention,

- les fig. 3 et 4 sont des vues schématiques respectivement de côté et de face d'un goniomètre de texture conforme à l'invention,

- la fig. 5 est une vue en perspective d'un exemple de réalisation d'un goniomètre de texture selon l'invention et,

- la fig. 6 représente un exemple de figures de pôles pouvant être tracés à l'aide du goniomètre de texture selon l'invention.

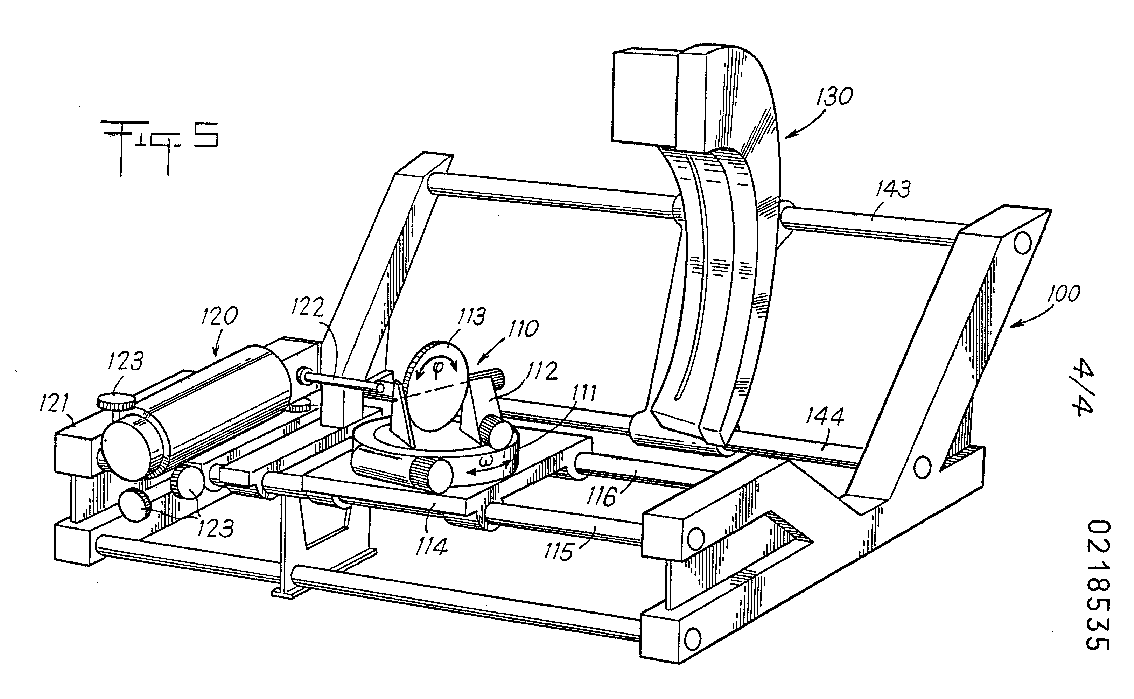

On rappelle que, lors d'une analyse de texture d'un matériau polycristallin, on cherche à déterminer la position et la densité des normales $N_{hkl}$ aux familles de plans réticulaires (hkl) à partir de l'analyse du faisceau de rayons X diffractés par ces familles de plans réticulaires (hkl). La position et la densité des normales $N_{hkl}$ peuvent être caractérisées sur une figure de pôles qui constitue une projection stéréographique de ces normales dans le plan de l'échantillon. De façon plus particulière des normales $N_{hkl}$ situées sur un cône présentant une ouverture $\psi$ et un axe confondu avec la normale Oz, sont en projection sur un cercle de rayon $\psi$ dans le plan de l'échantillon. On voit ainsi à titre d'exemple sur la figure 6 trois cercles concentriques de rayons $\psi_1$, $\psi_2$, $\psi_3$ dont le centre correspond à la projection de la normale Oz à l'échantillon. Les points $P_1$, $P_2$, $P_3$ correspondent à la projection des normales $N_{1\ hkl}$, $N_{2\ hkl}$, $N_{3\ hkl}$. Les points $P_1$, $P_2$, $P_3$ font, respectivement, des angles $\varphi_1$, $\varphi_2$, $\varphi_3$ par rapport à un axe Ox situé dans le plan de l'échantillon.

Pour avoir la répartition des normales $N_{hkl}$ aux familles de plans réticulaires (hkl), il convient d'observer tout le demi-espace délimité par le plan xOy de l'échantillon, c'est-à-dire mesurer l'intensité diffractée par les plans $(h_i k_i l_i)$ pour les couples d'angles ($\psi$, $\varphi$) variant de la façon suivante : $0 \leqslant \varphi \leqslant 90°$, $0 \leqslant \psi \leqslant 360°$.

Selon la présente invention, on évite de réaliser, pour une famille de plans réticulaires (hkl) des rotations de l'échantillon à la fois autour d'un axe Ox situé dans le plan de l'échantillon et autour d'un axe Oz perpendiculaire au plan de l'échantillon, ce qui conduit à une simplification du procédé de mesure et, parallèlement, à une diminution très importante du temps nécessaire à la conduite des mesures.

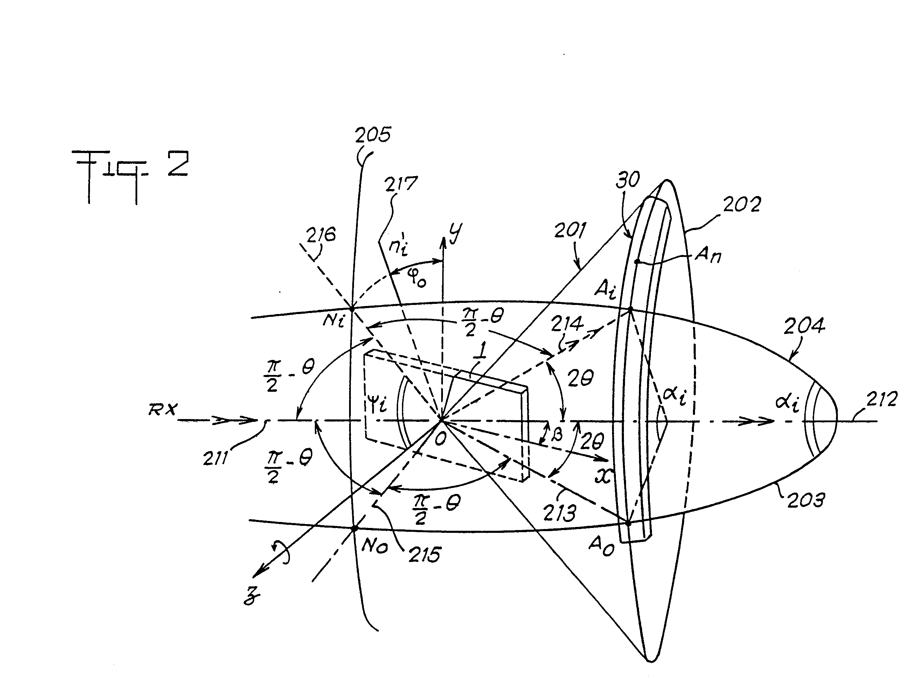

Comme on peut le voir sur le schéma de la fig. 2, le faisceau incident 211 de rayons X fait un angle $\beta$ avec le plan xOy de l'échantillon 1 et se trouve perpendiculaire au plan du cercle 202 défini par le compteur courbe 30 destiné à recevoir le rayonnement diffracté par les plans réticulaires de l'échantillon 1. Le compteur 30 est placé à une distance L de l'échantillon qui est telle que le cercle actif du compteur 30 coïncide avec le cône 201 d'ouverture $2\theta$, dit cône de DEBYE sur lequel sont situés les faisceaux de rayons X 213, 214 réfléchis par des plans réticulaires (hkl).

Pour une orientation donnée de l'échantillon 1 par rapport au faisceau de rayons X incident 211, on déplace le compteur 30 en translation parallèlement à la direction du faisceau incident 211, jusqu'à ce que le compteur puisse capter une partie du rayonnement réfléchi réparti sur le cône de DEBYE 201, c'est-à-dire jusqu'à ce que l'arc de cercle défini par le compteur courbe 30, qui est perpendiculaire au faisceau 211, soit confondu avec une partie d'un cercle défini par l'intersection du cône 201 et d'un plan perpendiculaire à celui-ci.

Une fois le compteur courbe positionné de façon adéquate, pour réaliser des mesures permettant d'établir une figure de pôles, il suffit de provoquer une rotation de l'échantillon 1 autour de sa normale Oz.

Sur la fig. 2, on a représenté le plan 203 de référence défini par le faisceau incident 211 et la normale Oz à l'échantillon 1, figurés en traits mixtes. Le cône de DEBYE d'ouverture $2\theta_{hkl}$ est désigné par la référence 201. Les normales aux plans (hkl) donnant réflexion sont sur un cône d'ouverture $\frac{\pi}{2} - \theta$ et le lieu des normales aux plans (hkl) est désigné par la référence 205. On a, en outre, représenté sur la fig. 2 un plan d'incidence 204 défini par les rayons X incidents 211 et une génératrice 214 du cône de DEBYE. Le plan d'incidence 204 forme un angle $\alpha_i$ avec le plan de référence 203.

Le point $A_i$ du compteur courbe 30, situé dans le plan d'incidence 204, voit les plans (hkl) de l'échantillon 1 dont la normale 216, définie par $ON_i$ appartient au plan d'incidence 204 et fait un angle $\psi_i$ avec la normale Oz à l'échantillon 1. La projection $On'_i$ 217 de la normale 216 dans le plan de l'échantillon 1 fait un angle $\varphi_{o_i}$ avec l'axe Oy de l'échantillon. Les angles $\psi_i$ et $\varphi_{o_i}$ sont obtenus par les relations suivantes :

$$\cos \psi_i = \cos \theta \cos \alpha_i \cos + \sin \theta \sin \beta \qquad (1)$$

$$\text{tg} \, \varphi_{o_i} = \frac{\cos \theta \cos \alpha_i \sin \beta - \sin \theta \cos \beta}{\cos \theta \sin \alpha_i} \qquad (2)$$

où $\alpha_i$ est l'angle entre le plan d'incidence 204 contenant le point $A_i$ considéré du compteur et le plan de référence 203 défini par le faisceau incident 211 de rayons X et la normale Oz à l'échantillon, $\beta$ est l'angle entre l'échantillon 1 et le faisceau incident 211 de rayons X, et $\theta$ correspond à la demi-ouverture du cône de DEBYE 201 déterminé par la loi de BRAGG.

Lorsque l'on fait tourner l'échantillon 1 autour de l'axe Oz, le point $A_i$ du compteur voit tous les plans (hkl) de l'échantillon dont la normale 216 fait un angle $\psi_i$ avec la normale Oz à l'échantillon 1. On notera que la normale 216 constitue la bissectrice de l'angle défini par le faisceau incident 211 et la génératrice $OA_i$ 214.

Les autres points du compteur 30, qui sont répartis sur un arc de 90° verront chacun tous les plans (hkl) dont la normale fait un angle $\psi$ déterminé, compris entre $(\beta - \theta)$ [point $A_0$ (di = 0)] et $\psi$ max [point $A_n$ ($\alpha$ i = 90°)] avec la normale Oz à l'échantillon.

Un compteur courbe 30, présentant un nombre de points répartis, par exemple, tous les 3 à 6° sur un arc de cercle de 90° et placé perpendiculairement à la direction du faisceau incident 211, permet ainsi d'obtenir toute l'information nécessaire au tracé de la figure de pôle (hkl), à l'aide d'une simple rotation azimutale de 360°, par exemple par pas de 5°, autour de la normale Oz à l'échantillon.

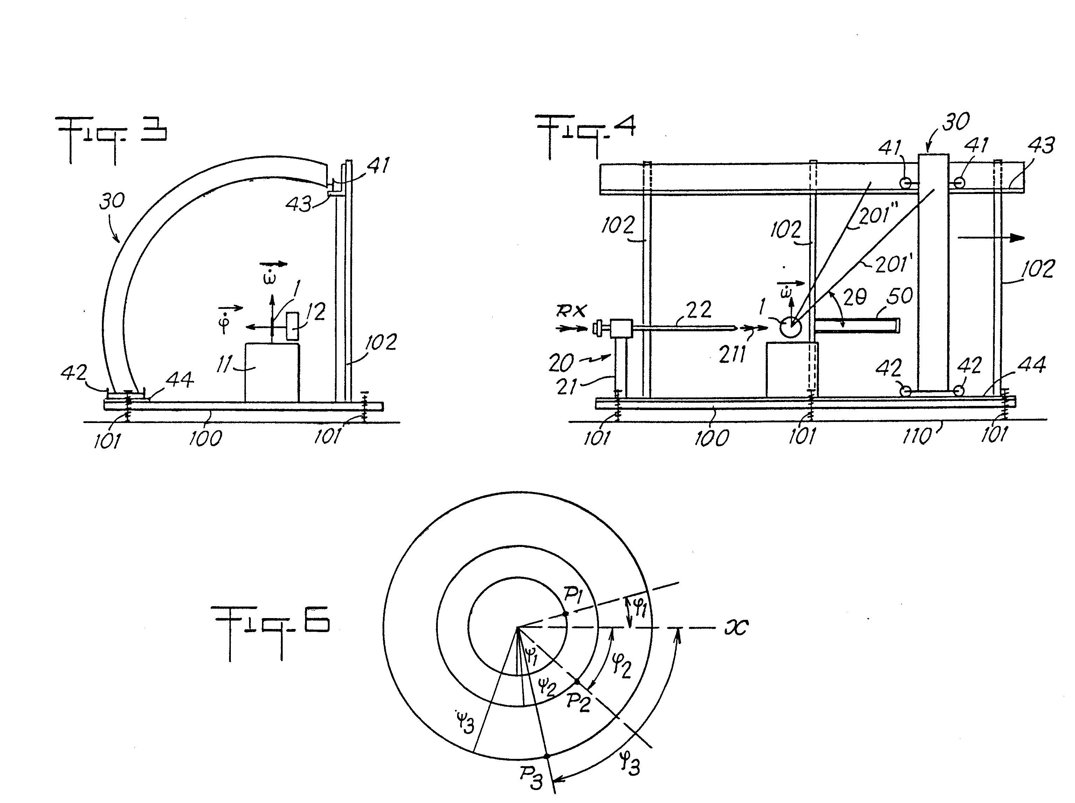

Les fig. 3 et 4 montrent un exemple de réalisation de goniomètre de texture permettant de mettre en oeuvre le procédé défini en référence à la fig. 2.

Le bâti 100, 102 du goniomètre repose sur une table 110, par l'intermédiaire de pieds 101 formant cales de réglage.

L'échantillon 1 est monté sur le bâti 100 à l'aide d'un support 11 permettant d'orienter (rotation $\omega$ ) la position de l'échantillon 1 par rapport à la direction d'un faisceau de rayons X émis par une source 20 munie d'un collimateur 22 et reposant sur le bâti 100 par l'intermédiaire d'un pied 21. Un dispositif 12 permet, en outre, de faire tourner l'échantillon 1 autour de sa normale Oz (rotation $\varphi$ ).

Un compteur courbe 30, dont le plan du cercle est perpendiculaire au faisceau 211 de rayons X émis par la source 20, repose par des galets 41, 42 sur des glissières 43, 44, respectivement, parallèles à la direction du faisceau 211, de manière à pouvoir se déplacer en translation parallèlement au faisceau 211 et être ainsi à même de capter un cône de DEBYE 201', 201" relatif à un plan réticulaire donné (h'k'l'), (h"k"l") respectivement.

Un puits 50, disposé dans l'alignement du faisceau de rayons X 211, de l'autre côté de l'échantillon 1, permet de recevoir les rayons X qui traversent l'échantillon 1 sans déviation.

La fig. 5 représente un exemple de réalisation de goniomètre de texture dont la structure générale répond au schéma des fig. 3 et 4.

La source de rayons X 120, comportant un collimateur 122, est montée sur un support 121 et présente une position qui peut être réglée au moyen de manettes de réglage 123. Le support d'échantillon 110 est monté sur une plate-forme 114 pouvant coulisser le long de glissières 115, 116 pour être rapprochée ou éloignée de la source 120. Le support 110 comprend, en outre, trois sous-ensembles 111, 112, 113 permettant d'orienter l'échantillon selon trois degrés de liberté, par rotation autour de trois axes d'un repère de référence lié au support 110. Le compteur en anneau 130 présente la forme d'un tiers de cercle situé dans un plan vertical perpendiculaire à la direction d'émission du faisceau de rayons X par le collimateur 122. Le compteur 130 peut coulisser le long de deux barres horizontales supérieure 143 et inférieure 144, parallèles à la direction d'émission du faisceau de rayons X par le collimateur 122.

Dans ce qui précède, il est indiqué que le compteur courbe est déplacé en translation par rapport à l'échantillon. Il doit être considéré qu'il serait équivalent de déplacer l'échantillon par rapport au compteur, un tel déplacement relatif pouvant ou non être imposé à la source de rayons X.

0218535

REVENDICATIONS :

1 - Procédé de détermination de la texture cristallographique d'un matériau polycristallin selon lequel on positionne un échantillon du matériau à analyser par rapport à un faisceau de rayons X incident (211) et on analyse le faisceau de rayons X (214) diffracté par l'échantillon à l'aide d'un compteur à scintillation du type compteur courbe (30) multicanaux,

caractérisé en ce que l'on dispose le compteur courbe (30) dans un plan perpendiculaire au faisceau de rayons X incident (211), en ce que l'on oriente le plan de l'échantillon (1), de manière qu'il définisse un angle prédéterminé ($\beta$) par rapport au faisceau de rayons X incident (211), en ce que l'on déplace relativement en translation le compteur courbe (30), par rapport à l'échantillon, parallèlement au faisceau de rayons X incident jusqu'à ce que le compteur (30) coïncide avec une section du cône de DEBYE défini par les faisceaux de rayons X diffractés (214) par l'échantillon (1), en ce que l'on modifie la position azimutale de l'échantillon (1) par rotation de celui-ci autour d'un axe (Oz) perpendiculaire au plan (xOy) de l'échantillon (1), en ce que l'on mesure, pour chaque position, sur le compteur (30) et en fonction de la position angulaire en azimut de l'échantillon, la densité de rayonnement diffracté et en ce que l'on établit la position et la densité des normales à une famille de plans réticulaires (hkl) de l'échantillon (1) sous la forme d'une figure de pôles à partir des mesures effectuées avec le compteur (30).

2 - Procédé selon la revendication 1, caractérisé en ce que l'on procède à des rotations azimutales de l'échantillon pas à pas.

3 - Procédé selon la revendication 1, caractérisé en ce que l'on procède à des rotations azimutales de l'échantillon, de façon continue.

4 - Procédé selon l'une quelconque des revendications 1 à 3, caractérisé en ce que l'on repère la position des plans réticulaires (hkl) à l'aide d'un compteur courbe (30) multicanaux comportant au moins quinze canaux répartis sur une portion de circonférence

0218535

s'étendant sur un secteur d'ouverture 90°.

5 - Dispositif de détermination de la texture cristallographique d'un matériau polycristallin pour la mise en oeuvre du procédé selon l'une des revendications 1 à 4, caractérisé en ce qu'il comprend un support (10) d'échantillon, une source de rayons X (20), un compteur courbe à scintillation multicanaux (30), des moyens (11) d'orientation du support d'échantillon (10) pour orienter le plan (xOy) de l'échantillon (1) par rapport à la direction des rayons X (211) émis par la source de rayonnement (20), des moyens (12) pour faire tourner le support d'échantillon (10), de telle sorte que l'échantillon (1) effectue une rotation azimutale autour de la normale (Oz) au plan (xOy) de l'échantillon, des moyens (43, 44) pour maintenir le compteur courbe (30) dans un plan perpendiculaire à la direction des rayons X (211) émis par la source (20) et des moyens (41, 42, 43, 44) pour déplacer en translation le compteur courbe (30) parallèlement à la direction des rayons X (211) émis par la source (20).

6 - Dispositif selon la revendication 5, caractérisé en ce qu'il comprend un compteur courbe multicanaux (30) comportant entre environ quinze et trente canaux répartis sur une portion de circonférence s'étendant sur un secteur d'ouverture 90°.

Fig. 1

0218535

Fig. 2

Fig-3

Fig-4

Fig-6

0218535

Fig 5